# EUROPEAN PATENT APPLICATION

(11) **EP 1 650 443 A1**
(43) Date of publication of application: **26.04.2006**
(21) Application number: 05256384.8
(22) Date of filing: 13.10.2005
(51) Int. Cl.: F16B 2/24, F16B 9/02

(54) **Spring retaining clips**

(30) Priority: 21.10.2004 GB 0423450
(71) Applicant: RICARDO UK LIMITED, Shoreham-by-Sea, West Sussex BN43 5FG (GB)
(72) Inventor: Packham, Robert Arthur Ernest, Sussex BN2 5PB (GB)
(74) Representative: Jennings, Nigel Robin

(57) **Abstract**

A Retaining clip for connecting two or more items together is in the form of a single strip of resilient material comprising a planer rear portion (3), a planer front portion (2) overlying it and a spring portion (4) integrally connected to the front and rear portions and adapted to exert a force on them to move relative to one another parallel to their planes. The front and rear portion (2, 3) for respective apertures (6, 7) and releasably engagable locking means (8). The front and rear portions are relatively movable between a locked position, in which the spring portion (4) is stressed and exerts a force on the front and rear portions and a locking means are in engagement and restrain relatively movement of the front and rear portions and the apertures are substantially in registry and portions of the two or more items to be connected can thus be inserted into them, and an unlocked position, in which the locking means (8) are disengaged and the two apertures are at least partially off set from one another.

## Description

The present invention relates to spring retaining clips for connecting two or more items together, particularly, though not exclusively, for automotive use.

When manufacturing a motor vehicle there are numerous items which must be connected together. Examples include connecting the exhaust pipe to the vehicle underbody and connecting bodywork panels to each other and/or to the vehicle body. Effecting the numerous connections that are required when manufacturing a motor vehicle is time-consuming and expensive. This applies in particular to connecting the sump cover to the undersurface of the engine block because typically 30 or more bolts are needed for this purpose. Not only is a considerable amount of time required to insert and screw in 30 or more bolts, but there is considerable expense associated with forming the 30 or more tapped holes that are required in the cylinder block. Additionally, the use of 30 or more nuts and bolts may substantially increase the weight of the engine.

It is therefore the object of the invention to provide a retaining or connecting clip for connecting two or more items together which is not only cheap to manufacture but which may also be applied more simply and cheaply than conventional connectors, such as threaded bolts, screws, pins, rivets, clamps and other conventional connectors known in the art, and which may also provide a lightweight alternative to conventional connectors.

According to the present invention, a retaining clip for connecting two or more items together is in the form of a single strip of resilient material and comprises a generally planar rear portion, a generally planar front portion overlying it and a spring portion integrally connected to the front and rear portions adapted to exert a force on them to urge them to move relative to one another parallel to their planes, the front and rear portions affording respective apertures and releasably engageable locking means, whereby the front and rear portions are relatively moveable between a locked position, in which the spring portion is stressed and exerts a force on the front and rear portions and the locking means are in engagement and restrain relative movement of the front and rear portions under the action of the force of the spring portion and the apertures are at least partially in registry and portions of the two or more items to be connected can thus be inserted into them, and an unlocked position in which the locking means are disengaged and the two apertures are partially offset from one another.

Thus the spring clip in accordance with the invention comprises a single strip of resilient material, such as spring steel or plastic material, comprising generally planar front and rear portions overlying one another and integrally connected together by a spring portion. It may, therefore, be manufactured with a significantly reduced weight in comparison to conventional connectors.
The front and rear portions afford respective apertures and releasably engageable locking means. The front and rear portions are relatively movable between a locked position, in which the spring portion is stressed and exerts a force on the front and rear portions and the locking means are in engagement and thus restrain relative movement of the front and rear portions under the action of the force of the spring portion and the apertures are at least partially in registry and portions of the two or more items to be connected can thus be inserted into them, and an unlocked position, in which the locking means are disengaged, thereby permitting the front and rear portions to be moved under the action of the spring force. The two apertures are partially offset from one another in this position and the superposed items within the apertures are engaged by one edge of one of the apertures and the opposite edge of the other aperture under the considerable force exerted by the spring portion. The portions of the items within the apertures are thus urged together under a considerable force and are thus immobilised with respect to one another and are thus effectively connected together. The application of such a retaining clip is very much simpler and more rapid than inserting a bolt into a threaded hole or inserting it through two unthreaded holes and subsequently applying a threaded nut to it. The cost of such a clip is also substantially lower than that of a nut and bolt or that of a bolt and forming a tapped hole in one of the items.

The locking means preferably comprise one or more projections on one of the front or rear portions which are selectively engageable in one or more complementary recesses in the other of the front or rear portions.

It is preferred that the or each locking projection comprises a locking portion which is an integral portion of the front or rear portion and is partially cut away from it and extends out of its plane. It is further preferred that the or each integral projection is connected to the front or rear portion at that side of the locking portion from which the force of the spring portion acts on it. This will in practice minimise the risk of inadvertent release of the locking means.

In order to facilitate release of the locking means it is preferred that at least one and preferably both of the front and rear portions have one or more release apertures, which apertures are at least partially aligned when they are provided in the front and rear portions and the front and rear portions are in the locked position, into which a tool can be inserted to move the front and rear portions relative to one another in order to disengage the locking means.

It is preferred that the rear portion has integrally attached to it a rearwardly extending stabilising projection for engagement with one or more of the items to be connected. Thus the front and rear portions of the spring clip constitute a generally flat structure, when they are in engagement with two or more connected items, and the positional stability of the clip is enhanced by the provision of a stabilising projection which has an engagement surface spaced away from the front and rear portions in a direction transverse to their plane for engagement with a surface of one or more of the items to be connected.

It is of course necessary that the items to be connected are sufficiently small that they may be inserted into the apertures formed in the front and rear portions of the clip or have portions which may be so inserted. If a plurality of such clips are to be used, for instance, to connect an automotive sump cover to the underside of the cylinder block, it is necessary for the periphery of the sump cover to have a plurality of recesses or cut-outs formed in it, thereby dividing the periphery into a plurality of tangs or projections, each of which is sufficiently small to fit into the apertures in a clip. Similarly, the underside of the engine block will need to have complementary tangs or projections formed in it for association with a respective tang on the sump cover and insertion with it into the receiving apertures of a respective retaining clip.

The spring portion may take many forms but it is preferred that it is of corrugated or undulating shape. It may also be either a compression spring or a tension spring.

These and other features and advantages of the invention will be more fully understood and appreciated by reference to the following detailed description of a preferred embodiment of the invention, which is given by way of example only with reference to the accompanying drawings, in which:

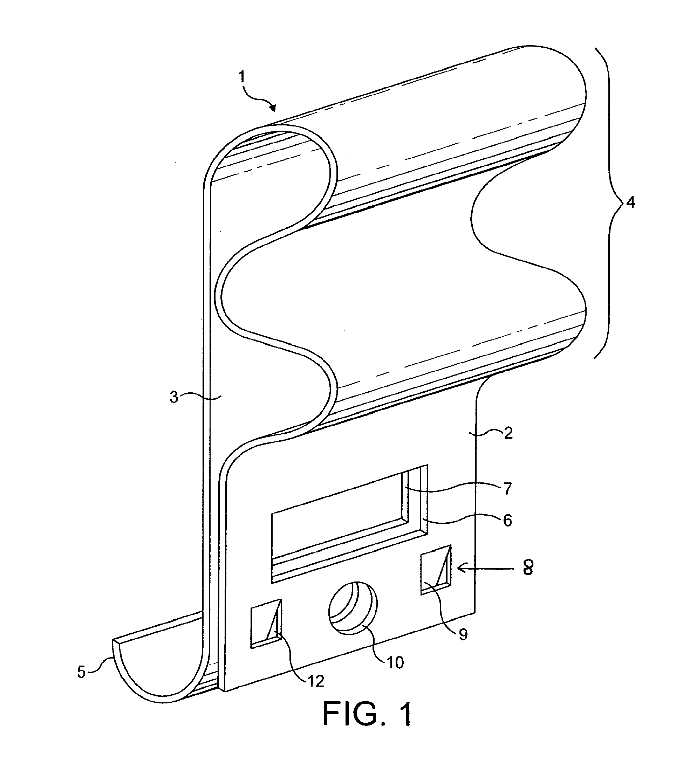

Figure 1 is a perspective view of a spring clip of the invention, in the "locked" configuration.

The retaining clip 1 is an integral strip of spring steel comprising a generally planar rear portion 3, a generally planar front portion 2 overlying it and a spring portion 4 comprising a corrugated spring integrally attached to both the front and rear portions. Respective apertures 6, 7 are formed in the front and rear portions for receiving two or more items to be connected. The retaining clip also comprises a releasably engageable locking means 8 and a rearwardly extending stabilising projection 5 extending from the rear portion for engagement with one or more of the items to be connected.

The spring portion is in this case a compression spring and, when the clip is in the "locked configuration", exerts a force on the front and rear portions which urges the front portion to move downwardly, as seen in the Figure, with respect to the rear portion. This movement is prevented by the locking means 8, which in this case constitutes locking projections 9 on the front portion and corresponding locking apertures 12 in the rear portion. The locking projections 9 comprise portions of the front planar portion partly cut away, which extend rearwardly out of the plane of the front planar portion and engage in the locking apertures in the rear planar portion so as to prevent movement of the front and rear planar portions relative to each other under the action of the force of the spring portion. Also formed in the front and rear portions are respective release apertures 10 which are generally aligned, when the clip is in the locked configuration.

When in the locked configuration, the receiving apertures 6, 7 are substantially in registry so that two or more items to be connected can be inserted into them. Such items may constitute elongate extensions integrally connected to mechanical components of an automotive engine, such as an engine cylinder head and cylinder block or an engine sump cover and cylinder block.

The locking means 8 may be unlocked by the insertion of a suitable tool into the aligned release apertures 10 and manipulation of the tool so that the locking projections 9 are disengaged from their respective locking apertures 12. If there are no items within the apertures 6, 7, the front and rear portions will be moved relative to one another by the spring force to the fully unlocked position in which no spring force acts and the apertures 6, 7 are wholly or at least partly out of registry. If two or more items to be connected are inserted into the apertures 6, 7 and the locking means 8 is released, the compressed spring portion moves the front and rear portions relative to one another in their plane so that the edges of the apertures 6, 7 engage the items within the apertures under the very considerable force exerted by the spring portion so that the items are firmly held together in the receiving apertures. Thus the edge of the front portion's receiving aperture 6 which is closest to the spring portion will urge the uppermost item away from the spring portion. The edge of the rear portion's receiving aperture 7 which is furthest away from the spring portion will urge the lowermost item to move towards the spring portion with an equal and opposite force to that applied by the front portion. Thus the items are held together under compression and are thus effectively connected by the forces applied through the front and rear portions by the spring. In this event, the clip will not reach the fully unlocked position and although the front and rear portions will be in equilibrium, the spring portion will still exert a substantial force. Additionally, the rearwardly extending stabilising projection 5 engages the lowermost item or a component connected to it. This enhances the stability of the clip when it is in operation, reducing the likelihood that the clip will become displaced from its position.

When the clip is in the unlocked configuration, it may be returned to the locked configuration through the use of a suitable locking tool. For example, the tool may be inserted into the unlocking apertures and manipulated so as to move the front and rear portions relative to one another to compress the spring portion and bring the respective locking apertures of the front and rear portions into registry, and so as to engage the locking projections into their respective locking apertures. The items held in the receiving apertures will then be relieved of the forces acting to keep them in contact and the items may then be removed from the retaining clip.

The retaining clip should be made from a material chosen to have physical properties suited to the particular application of the clip, so that the material can provide a sufficient compression force on the items to be connected in order to keep those items connected, and so that the clip is able to withstand any pressures or temperatures to which the clip may be subjected, when in operation. Different portions of the retaining clip may be treated during manufacture of the clip in order to confer desired physical properties to the different portions. The retaining clip may be made of steel, eg. spring steel, or pressed steel or other metallic material or plastic material. The use of a thermoplastic material to make the clip has the particular advantage that the weight of the clip is significantly reduced, and this particular material may therefore be preferable when it is desirable to keep the weight of the engine as low as possible.

The retaining clip of the invention is preferably provided to the consumer in the locked configuration, to allow easy application of the clip. The items to be connected need only be placed in a superposed arrangement through the receiving apertures and the locking mechanism disengaged, for the clip to be put into operation. This method of operation of the retaining clip of the invention is more simple and convenient than the methods of connecting items involving conventional connectors such as threaded bolts and threaded nuts, where considerable time and effort is needed to form tapped holes in the items to be connected, and to attach the threaded connectors.

Though the clip in accordance with the present invention is primarily intended for connecting together mechanical components of an automotive engine, it may be used also in connection with other automotive components or indeed in any other engineering application in which it is desirable that two or more items be rapidly and cheaply connected together.

It will be appreciated that numerous modifications may be made to the specific embodiment described above. Thus the receiving apertures 6, 7 in the front and rear portions are illustrated as being rectangular but it will be appreciated that they may be of any desired shape which is compatible with the shape of the items to be inserted into them and indeed that it may be preferable for them to have some shape other than rectangular so that they complement the shape of the items to be received in them and may thus receive and engage them snugly. The spring portion 4 acts in the illustrated embodiment as a compression spring but it will be appreciated that it may be equally act as a tension spring.

## Claims

1. A retaining clip for connecting two or more items together, in the form of a single strip of resilient material comprising a generally planar rear portion (3), a generally planar front portion (2) overlying it and a spring portion (4) integrally connected to the front and rear portions adapted to exert a force on them to urge them to move relative to one another parallel to their planes, the front and rear portions (2, 3) affording respective apertures (6, 7) and releasably engageable locking means (8), whereby the front and rear portions are relatively moveable between a locked position, in which the spring portion (4) is stressed and exerts a force on the front and rear portions and the locking means (8) are in engagement and restrain relative movement of the front and rear portions (2, 3) under the action of the force of the spring portion (4) and the apertures (6, 7) are at least partially in registry and portions of the two or more items to be connected can thus be inserted into them, and an unlocked position, in which the locking means (8) are disengaged and the two apertures are partially offset from one another.

2. A clip as claimed in Claim 1, in which the locking means (8) comprise one or more locking apertures (12) in one of the front or rear portions (2, 3) and one or more locking projections (9) on the other of the front or rear portions which are selectively engageable in respective locking apertures.

3. A clip as claimed in Claim 2, in which the or each locking projection (9) is an integral portion of the front or rear portion (2, 3) and is partially cut away from it and extends out of its plane.

4. A clip as claimed in Claim 3, in which the or each integral portion (12) is integrally connected to the front or rear portion (2, 3) along a line on that side of the integral portion (12) which is opposite to the direction in which it is urged by the spring portion (4).

5. A clip as claimed in any one of the preceding claims, in which at least one of the front and rear portions (2, 3) has one or more release apertures (10) into which a tool may be inserted to move the front and rear portions (2,3) relative to one another in order to disengage the locking means (8).

6. A clip as claimed in Claim 5, in which the front and rear portions (2, 3) have respective release apertures (10), which are at least partially aligned when the front and rear portions are in the locked position.

7. A clip as claimed in any of the preceding claims, in which the rear portion (3) has integrally attached to it a rearwardly extending stabilising projection (5) for engagement with one or more of the items to be connected.

8. A clip as claimed in any one of the preceding claims, in which the resilient material is spring steel or thermoplastic material.

9. A clip as claimed in any one of the preceding claims in which the spring portion (4) is of corrugated shape.
